# EUROPÄISCHE PATENTSCHRIFT

(11) **EP 3 740 739 B1**
(45) Veröffentlichungstag und Bekanntmachung des Hinweises auf die Patenterteilung: **15.12.2021**
(21) Anmeldenummer: 19701450.9
(22) Anmeldetag: 10.01.2019
(51) Int. Cl.: G01D 5/14

(54) **VERFAHREN ZUR WEGERFASSUNG, WEGERFASSUNGSANORDNUNG UND BREMSSYSTEM**
METHOD AND SYSTEM FOR STROKE MASUREMENT AND BRAKE SYSTEM
PROCÉDÉ ET SYSTÈME DE MESURE DE COURSE ET SYSTÈME DE FREIN

(30) Priorität: 15.01.2018 DE 102018200601; 09.01.2019 DE 102019200183
(43) Veröffentlichungstag der Anmeldung: 25.11.2020
(73) Patentinhaber: Continental Teves AG & Co. OHG, 60488 Frankfurt am Main (DE)
(72) Erfinder: ALBRECHT, Veit, 60488 Frankfurt am Main (DE); SCHARDT, Volker, 60488 Frankfurt am Main (DE); HABIG, Jens, 60488 Frankfurt am Main (DE); HÜTTER, Benjamin, 60488 Frankfurt am Main (DE); BURGDORF, Christian, 60488 Frankfurt am Main (DE); FRITZ, Wolfgang, 60488 Frankfurt am Main (DE)
(74) Vertreter: Continental Corporation
(86) Internationale Anmeldenummer: PCT/EP2019/050570
(87) Internationale Veröffentlichungsnummer: WO 2019/138007

(56) Entgegenhaltungen:
- WO-A1-2009/121193
- DE-A1- 10 114 043
- DE-A1-102007 047 547
- DE-A1-102014 109 693
- US-A1- 2015 219 472

## Beschreibung

Die Erfindung betrifft ein Verfahren zur Wegerfassung nach dem Oberbegriff von Anspruch 1, eine Wegerfassungsanordnung nach Anspruch 4, ein Bremssystem nach Anspruch 7, ein Kraftfahrzeug nach Anspruch 8 sowie eine entsprechende Anwendung nach Ansprüchen 9 und 10.

Im Stand der Technik sind Wegsensoren zur Erfassung des Betätigungswegs einer Bremsstange bekannt, welche in ein Bremsensteuergerät integriert sind und üblicherweise auf einem induktiven Prinzip oder auf dem Prinzip eines magnetischen Winkelsensors basieren. WO 2009/121193 A1 offenbart einen Sensor nach dem Stand der Technik.

Der Nachteil von Sensoren nach dem induktiven Prinzip ist, dass der Sensor immer länger sein muss als die zu messende Weglänge und der Sensor bei Verwendung eines gewickelten Transformators teuer und aufwändig zu fertigen ist.

Bei den Sensoren basierend auf dem Prinzip eines magnetischen Winkelsensors ist im Stand der Technik die Verwendung von zweidimensionalen Hall-Sensoren bekannt. Diese Sensoren messen die Feldstärke in jeweils X-Richtung und Y-Richtung und sind dadurch in der Lage, einen Winkel von 360° zu messen. Eindimensionale Hall-Sensoren sind hingegen auf einen Winkel von 180° beschränkt. Der Feldwinkel ist aus den Feldstärken der X-Richtung und der Z-Richtung mittels des Arkustangens berechenbar.

Der Nachteil beider Prinzipien besteht darin, dass sie nicht ausreichend robust gegen magnetische Störfelder sind.

So ist aus der WO 2009/121193 A1 eine magnetische Linearsensoranordnung zur Erfassung der Lage eines entlang einer Stellbahn verstellbaren Bauteils bekannt. Entlang der Stellbahn ist eine einzelne Einrichtung zur Erzeugung eines Magnetfelds angeordnet. Im Wirkungsbereich dieses Magnetfelds ist zumindest ein galvanomagnetischer Detektor mit mindestens zwei Messfeldern vorgesehen, wobei der Detektor ein Hallsensor ist, welcher das Magnetfeld in einer Ebene oder räumlich vermisst.

Ferner ist aus der DE 10 2007 047 547 A1 eine Vorrichtung zum Erfassen einer Betätigungskraft eines Bremspedals bekannt. Es ist eine Sensoreinrichtung mit zwei Hallsensoren vorgesehen, welche gemeinsam auf einem Kraftaufnahmeglied oder einem Kraftübertragungsglied angeordnet sind, wobei den Hallsensoren gegenüberliegend ein Permanentmagnet an dem Kraftaufnahmeglied oder dem Kraftübertragungsglied angeordnet ist, sodass bei Relativbewegung zwischen Kraftaufnahmeglied und dem Kraftübertragungsglied es zu einer Änderung der Hallspannung in den beiden Hallsensoren kommt.

Es ist damit die Aufgabe der Erfindung, eine Wegerfassungsanordnung bereitzustellen, welche eine verbesserte Robustheit gegen magnetische Störfelder aufweist.

Die Aufgabe wird gelöst durch die unabhängigen Ansprüche.

Die Erfindung betrifft ein Verfahren zur Wegerfassung mittels einer Wegerfassungsanordnung, wobei die Wegerfassungsanordnung einen ersten magnetischen Winkelsensor aufweist und folgender Schritt durchgeführt wird:
- Ermittlung einer ersten Feldstärke in eine erste Richtung und Ermittlung einer zweiten Feldstärke in eine zweite Richtung mittels des ersten Winkelsensors,
wobei die Wegerfassungsanordnung einen zweiten magnetischen Winkelsensor aufweist, der in einem vorbestimmten Abstand zum ersten Winkelsensor angeordnet ist und folgender Schritt durchgeführt wird:
- Ermittlung einer ersten Feldstärke in eine erste Richtung und Ermittlung einer zweiten Feldstärke in eine zweite Richtung mittels des zweiten Winkelsensors.

Durch die Erfindung ist es vorteilhaft möglich, dass ein störungsfreies oder nahezu störungsfreies Signal bestimmt werden kann, so dass die Robustheit der Wegerfassungsanordnung gegenüber Störfeldern verbessert wird. Ein weiterer Vorteil ist, dass die Sensorik relativ einfach austauschbar ist und geringe Kosten mit sich bringt.

Bevorzugt erzeugt ein mit der Bremsbestätigungsstange verbundener Permanentmagnet ein Magnetfeld, dessen Feldvektor abhängig von der Magnetposition ist. Die Winkelsensoren sind besonders bevorzugt als 2D-Hall-Sensoren ausgebildet. Damit messen die Sensoren eine Feldstärke jeweils in einer X-Richtung (erste Feldstärke der ersten Richtung) und einer Z-Richtung (zweite Feldstärke der zweiten Richtung).

In einer bevorzugten Weiterbildung der Erfindung werden für die Bestimmung des störungsfreien Signals mehrere Schritte durchgeführt. Dafür wird eine erste Differenzfeldstärke durch Bilden der Differenz zwischen der ersten Feldstärke des ersten Winkelsensors und der ersten Feldstärke des zweiten Winkelsensors berechnet. Anders gesagt wird eine Differenz zwischen der ersten Feldstärke des ersten Winkelsensors und der ersten Feldstärke des zweiten Winkelsensors ermittelt, welche als erste Differenzfeldstärke definiert wird.

Zudem wird eine zweite Differenzfeldstärke durch Bilden der Differenz zwischen der zweiten Feldstärke des ersten Winkelsensors und der zweiten Feldstärke des zweiten Winkelsensors berechnet. Anders gesagt wird eine Differenz zwischen der zweiten Feldstärke des ersten Winkelsensors und der zweiten Feldstärke des zweiten Winkelsensors ermittelt, welche als zweite Differenzfeldstärke definiert wird.

In einer bevorzugten Weiterbildung der Erfindung wird anschließend ein Feldwinkel aus der ersten Differenzfeldstärke und der zweiten Differenzfeldstärke mittels der Arkustangens-Funktion berechnet.

Da sich die beiden Winkelsensoren in einem bestimmten, insbesondere festen, Abstand zueinander befinden, messen beide Sensoren einen unterschiedlichen Feldwinkel. Tritt ein hinreichend homogenes magnetisches Störfeld auf, so werden die Feldstärken in X-Richtung (erste Richtung) und Z-Richtung (zweite Richtung) beider Sensoren gleichartig beeinflusst. Durch die Bildung der Differenz zwischen den ersten Feldstärken und zwischen den zweiten Feldstärken wird das Störsignal eliminiert. Vorteilhaft wird dann durch die Anwendung der Arkustangens-Funktion auf die erste Differenzfeldstärke und die zweite Differenzfeldstärke ein ungestörtes, wegproportionales Ausgangssignal erhalten.

Die Erfindung betrifft weiterhin eine Wegerfassungsanordnung, welche bevorzugt in einem Bremssystem angeordnet ist. Die Wegerfassungsanordnung umfasst einen ersten Winkelsensor, welcher ein erstes Erfassungselement zum Erfassen einer ersten Feldstärke in eine erste Richtung und ein zweites Erfassungselement zum Erfassen einer zweiten Feldstärke in einer zweiten Richtung aufweist, wobei die Wegerfassungsanordnung außerdem einen zweiten Winkelsensor umfasst, welcher ein erstes Erfassungselement zum Erfassen einer ersten Feldstärke in eine erste Richtung und ein zweites Erfassungselement zum Erfassen einer zweiten Feldstärke in einer zweiten Richtung aufweist. Jeder der beiden Winkelsensoren weist somit ein erstes und ein zweites Erfassungselement auf, wobei die Erfassungselemente bevorzugt als Hallelemente ausgebildet sind. Jeder der Winkelsensoren ist somit bevorzugt als 2D-Hallsensor ausgebildet.

In einer bevorzugten Weiterbildung der Wegerfassungsanordnung weist diese eine Recheneinheit auf, mittels welcher eine erste Differenzfeldstärke zwischen der ersten Feldstärke des ersten Winkelsensors und der ersten Feldstärke des zweiten Winkelsensors berechenbar ist. Zudem ist ebenfalls eine zweite Differenzfeldstärke zwischen der zweiten Feldstärke des ersten Winkelsensors und der zweiten Feldstärke des zweiten Winkelsensors berechenbar.

In einer bevorzugten Weiterbildung der Erfindung ist mittels der Recheneinheit ein Feldwinkel unter Heranziehung des Arkustangens aus der ersten Differenzfeldstärke und der zweiten Differenzfeldstärke berechenbar.

In einer bevorzugten Weiterbildung der Erfindung sind die Winkelsensoren in einen Bremszylinder integriert.

Weiterhin betrifft die Erfindung ein Bremssystem mit einer genannten Wegerfassungsanordnung, ein Kraftfahrzeug mit einem derartigen Bremssystem und die Verwendung des Verfahrens und der genannten Wegerfassungsanordnung in einem Bremssystem.

Weitere bevorzugte Ausführungsformen ergeben sich auch aus den Unteransprüchen und der nachfolgenden Beschreibung von Ausführungsbeispielen anhand von der Figur.

In schematischer Darstellung zeigt beispielhaft:
- Fig. 1: eine erfindungsgemäße Wegerfassungsanordnung bzw. Teile einer erfindungsgemäßen Wegerfassungsanordnung sowie
- Fig. 2: ein Ablaufdiagramm für das erfindungsgemäße Verfahren zur Wegerfassung.

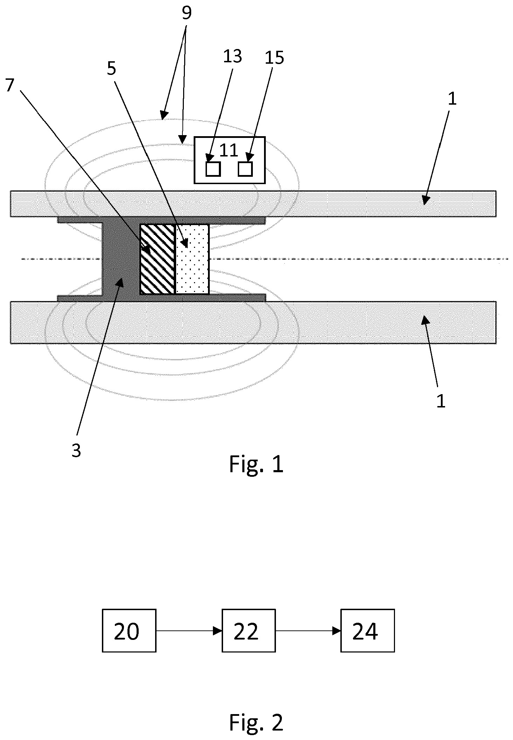

Fig. 1 zeigt eine Wegerfassungsanordnung bzw. Teile einer Wegerfassungsanordnung gemäß der Erfindung. Dargestellt ist ein Zylinder 1, insbesondere ein Zylinder eines Bremszylinders, sowie ein zugehöriger Kolben 3. In dem Kolben bzw. an dem Kolben ist ein Permanentmagnet angeordnet, welcher einen Nordpol 5 und einen Südpol 7 umfasst. Von den Polen 5, 7 werden Feldlinien 9 erzeugt, wobei in Fig. 1 beispielhaft zwei dieser Feldlinien mit der Bezugsziffer 9 versehen sind. Ferner ist eine Sensoranordnung 11 gezeigt, welche einen ersten magnetischen Winkelsensor 13 und einen zweiten magnetischen Winkelsensor 15 aufweist. Die Winkelsensoren 13, 15 sind bevorzugt als 2D-Hallsensoren ausgebildet und umfassen daher jeweils ein erstes und ein zweites Erfassungselement, mittels welchen Feldstärken in zwei unterschiedliche Richtungen (X- und Z-Richtung) erfasst werden.

Fig. 2 zeigt ein Ablaufdiagramm für das erfindungsgemäße Verfahren zur Wegerfassung.

Zunächst wird im Schritt 20 eine erste Feldstärke in einer ersten Richtung mittels des ersten Erfassungselements des ersten Winkelsensors 13 und eine zweite Feldstärke in einer zweiten Richtung mittels des zweiten Erfassungselements des ersten Winkelsensors 13 ermittelt. Gleichzeitig oder zeitlich versetzt wird eine erste Feldstärke in einer ersten Richtung mittels des ersten Erfassungselements des zweiten Winkelsensors 15 und eine zweite Feldstärke in einer zweiten Richtung mittels des zweiten Erfassungselements des zweiten Winkelsensors 15 ermittelt. Die beiden Winkelsensoren 13, 15 ermitteln also mit ihren Erfassungselementen die jeweilige Feldstärke.

Anschließend wird im Schritt 22 jeweils eine Differenz zwischen den ersten Feldstärken und zwischen den zweiten Feldstärken der verschiedenen Winkelsensoren 13, 15 ermittelt. Die Differenz zwischen der ersten Feldstärke des ersten Winkelsensors 13 und der ersten Feldstärke des zweiten Winkelsensors 15 ergibt eine erste Differenzfeldstärke. Die Differenz zwischen der zweiten Feldstärke des ersten Winkelsensors 13 und der zweiten Feldstärke des zweiten Winkelsensors 15 ergibt eine zweite Differenzfeldstärke.

Daraufhin wird in Schritt 24 aus der ersten Differenzfeldstärke und der zweiten Differenzfeldstärke mittels der Arkustangens-Funktion ein Feldwinkel berechnet, so dass ein ungestörtes, wegproportionales Ausgangssignal erhalten wird. Vorteilhaft wird durch das Verfahren so die Robustheit der Wegerfassungsanordnung erhöht.

Die Erfindung findet vorzugsweise Anwendung in einem Bremssystem, insbesondere einem Bremssystem eines Kraftfahrzeugs.

## Patentansprüche

1. Verfahren zur Wegerfassung mittels einer Wegerfassungsanordnung für ein Bremssystem, wobei die Wegerfassungsanordnung einen ersten magnetischen Winkelsensor (13) aufweist und folgender Schritt (20) durchgeführt wird:
- Ermittlung einer ersten Feldstärke in eine erste Richtung und Ermittlung einer zweiten Feldstärke in eine zweite Richtung mittels des ersten Winkelsensors (13),
**dadurch gekennzeichnet, dass** die Wegerfassungsanordnung einen zweiten magnetischen Winkelsensor (15) aufweist, der in einem vorbestimmten Abstand zum ersten Winkelsensor (13) angeordnet ist und folgender Schritt durchgeführt wird:
- Ermittlung einer ersten Feldstärke in eine erste Richtung und Ermittlung einer zweiten Feldstärke in eine zweite Richtung mittels des zweiten Winkelsensors (15).

2. Verfahren nach Anspruch 1, **dadurch gekennzeichnet, dass** folgende Schritte (22) durchgeführt werden:
- Berechnen einer ersten Differenzfeldstärke durch Bilden der Differenz zwischen der ersten Feldstärke des ersten Winkelsensors (13) und der ersten Feldstärke des zweiten Winkelsensors (15),
- Berechnen einer zweiten Differenzfeldstärke durch Bilden der Differenz zwischen der zweiten Feldstärke des ersten Winkelsensors (13) und der zweiten Feldstärke des zweiten Winkelsensors (15).

3. Verfahren nach Anspruch 2, **dadurch gekennzeichnet, dass** folgender Schritt (24) durchgeführt wird:
- Berechnen eines Feldwinkels aus der ersten Differenzfeldstärke und der zweiten Differenzfeldstärke mittels der Arkustangens-Funktion.

4. Wegerfassungsanordnung für ein Bremssystem mit einem ersten Winkelsensor (13), welcher ein erstes Erfassungselement zum Erfassen einer ersten Feldstärke in eine erste Richtung und ein zweites Erfassungselement zum Erfassen einer zweiten Feldstärke in einer zweiten Richtung aufweist, **dadurch gekennzeichnet, dass** die Wegerfassungsanordnung einen zweiten Winkelsensor (15) aufweist, welcher ein erstes Erfassungselement zum Erfassen einer ersten Feldstärke in eine erste Richtung und ein zweites Erfassungselement zum Erfassen einer zweiten Feldstärke in einer zweiten Richtung aufweist.

5. Wegerfassungsanordnung nach Anspruch 4, **dadurch gekennzeichnet, dass** die Wegerfassungsanordnung eine Recheneinheit aufweist, mittels welcher eine erste Differenzfeldstärke zwischen der ersten Feldstärke des ersten Winkelsensors (13) und der ersten Feldstärke des zweiten Winkelsensors (15) sowie eine zweite Differenzfeldstärke zwischen der zweiten Feldstärke des ersten Winkelsensors (13) und der zweiten Feldstärke des zweiten Winkelsensors (15) berechenbar ist.

6. Wegerfassungsanordnung nach Anspruch 5, **dadurch gekennzeichnet, dass** mittels der Recheneinheit ein Feldwinkel unter Heranziehung des Arkustangens berechenbar ist.

7. Bremssystem mit einer Wegerfassungsanordnung nach einem der Ansprüche 4 bis 6.

8. Kraftfahrzeug mit einem Bremssystem nach Anspruch 7.

9. Verwendung einer Wegerfassungsanordnung nach einem der Ansprüche 4 bis 6 in einem Bremssystem.

10. Anwendung eines Verfahrens nach einem der Ansprüche 1 bis 3 in einem Bremssystem.

## Claims

1. Method for sensing travel by means of a travel-sensing arrangement for a brake system, wherein the travel-sensing arrangement has a first magnetic angle sensor (13), and the following step (20) is carried out:
- determining a first field strength in a first direction and determining a second field strength in a second direction by means of the first angle sensor (13),
**characterized in that** the travel-sensing arrangement has a second magnetic angle sensor (15) which is arranged at a predetermined distance from the first angle sensor (13), and the following step is carried out:
- determining a first field strength in a first direction and determining a second field strength in a second direction by means of the first angle sensor (15).

2. Method according to Claim 1, **characterized in that** the following steps (22) are carried out:
- calculating a first difference field strength by forming the difference between the first field strength of the first angle sensor (13) and the first field strength of the second angle sensor (15),
- calculating a second difference field strength by forming the difference between the second field strength of the first angle sensor (13) and the second field strength of the second angle sensor (15).

3. Method according to Claim 2, **characterized in that** the following step (24) is carried out:
- calculating a field angle from the first difference field strength and the second difference field strength by means of the arc tangent function.

4. Travel-sensing arrangement for a brake system having a first angle sensor (13) which has a first sensing element for sensing a first field strength in a first direction and a second sensing element for sensing a second field strength in a second direction, **characterized in that** the travel-sensing arrangement has a second angle sensor (15) which has a first sensing element for sensing a first field strength in a first direction and a second sensing element for sensing a second field strength in a second direction.

5. Travel-sensing arrangement according to Claim 4, **characterized in that** the travel-sensing arrangement has a computing unit by means of which a first difference field strength between the first field strength of the first angle sensor (13) and the first field strength of the second angle sensor (15) and a second difference field strength between the second field strength of the first angle sensor (13) and the second field strength of the second angle sensor (15) can be calculated.

6. Travel-sensing arrangement according to Claim 5, **characterized in that**, by means of the computing unit, a field angle can be calculated using the arc tangent.

7. Brake system having a travel-sensing arrangement according to one of Claims 4 to 6.

8. Motor vehicle having a brake system according to Claim 7.

9. Use of a travel-sensing arrangement according to one of Claims 4 to 6 in a brake system.

10. Use of a method according to one of Claims 1 to 3 in a brake system.

## Revendications

1. Procédé de mesure de course au moyen d'un agencement de mesure de course pour un système de freinage, l'agencement de mesure de course présentant un premier capteur d'angle magnétique (13), et l'étape suivante (20) étant effectuée, consistant à :
- déterminer une première force de champ dans une première direction et déterminer une deuxième force de champ dans une deuxième direction au moyen du premier capteur d'angle (13),
**caractérisé en ce que** l'agencement de mesure de course présente un deuxième capteur d'angle magnétique (15) qui est disposé à une distance prédéterminée du premier capteur d'angle (13), et l'étape suivante est effectuée, consistant à :
- déterminer une première force de champ dans une première direction et déterminer une deuxième force de champ dans une deuxième direction au moyen du deuxième capteur d'angle (15).

2. Procédé selon la revendication 1, **caractérisé en ce que** les étapes suivantes (22) sont effectuées, consistant à :
- calculer une première force de champ différentielle en formant la différence entre la première force de champ du premier capteur d'angle (13) et la première force de champ du deuxième capteur d'angle (15),
- calculer une deuxième force de champ différentielle en formant la différence entre la deuxième force de champ du premier capteur d'angle (13) et la deuxième force de champ du deuxième capteur d'angle (15).

3. Procédé selon la revendication 2, **caractérisé en ce que** l'étape suivante (24) est effectuée, consistant à :
- calculer un angle de champ à partir de la première force de champ différentielle et de la deuxième force de champ différentielle au moyen de la fonction arc tangente.

4. Agencement de mesure de course pour un système de freinage, comprenant un premier capteur d'angle (13) qui présente un premier élément de détection pour détecter une première force de champ dans une première direction et un deuxième élément de détection pour détecter une deuxième force de champ dans une deuxième direction,
**caractérisé en ce que** l'agencement de mesure de course présente un deuxième capteur d'angle (15) qui présente un premier élément de détection pour détecter une première force de champ dans une première direction et un deuxième élément de détection pour détecter une deuxième force de champ dans une deuxième direction.

5. Agencement de mesure de course selon la revendication 4, **caractérisé en ce que** l'agencement de mesure de course présente une unité de calcul au moyen de laquelle une première force de champ différentielle entre la première force de champ du premier capteur d'angle (13) et la première force de champ du deuxième capteur d'angle (15) ainsi qu'une deuxième force de champ différentielle entre la deuxième force de champ du premier capteur d'angle (13) et la deuxième force de champ du deuxième capteur d'angle (15) peuvent être calculées.

6. Agencement de mesure de course selon la revendication 5, **caractérisé en ce que** l'unité de calcul permet de calculer un angle de champ en faisant appel à l'arc tangente.

7. Système de freinage comprenant un agencement de mesure de course selon l'une quelconque des revendications 4 à 6.

8. Véhicule automobile comprenant un système de freinage selon la revendication 7.

9. Utilisation d'un agencement de mesure de course selon l'une quelconque des revendications 4 à 6 dans un système de freinage.

10. Application d'un procédé selon l'une quelconque des revendications 1 à 3 dans un système de freinage.
